# EUROPEAN PATENT APPLICATION

(11) **EP 4 283 051 A1**
(43) Date of publication of application: **29.11.2023**
(21) Application number: 21935171.5
(22) Date of filing: 08.12.2021
(51) Int. Cl.: E02F 9/20, H04Q 9/00, H04N 7/18

(54) **WORK ASSISTANCE SYSTEM AND WORK ASSISTANCE COMPOSITE SYSTEM**

(30) Priority: 30.03.2021 JP 2021058131
(71) Applicant: KOBELCO CONSTRUCTION MACHINERY CO., LTD., Hiroshima-shi Hiroshima 731-5161 (JP)
(72) Inventor: HIROSE Ryuichi, Tokyo 141-8626 (JP); MORITA Yuki, Hiroshima-shi, Hiroshima 731-5161 (JP); MATSUDA Yuya, Hiroshima-shi, Hiroshima 731-5161 (JP); OTANI Masaki, Hiroshima-shi, Hiroshima 731-5161 (JP); SAIKI Seiji, Tokyo 141-8626 (JP); YAMAZAKI Yoichiro, Tokyo 141-8626 (JP)
(74) Representative: Schön, Christoph
(86) International application number: PCT/JP2021/045030
(87) International publication number: WO 2022/209018

(57) **Abstract**

A remote system is provided which is capable of causing information about a work machine selected by an operator and about a slave connected with a master to be displayed. A remote operation system communicates with work machines and with a remote operation device which remotely operates one work machine as a target among the work machines. An actual machine image-capturing device capturing an image and an actual machine identification information of which is captured to be included in the image, are mounted on the work machine as a candidate of the target among the work machines. The system includes a first assistance process element which connects a cooperating work machine with the remote operation device, the work machine being identified by an identifier corresponding to selection information of the selected work machine, and acquires the image captured by the actual machine image-capturing device of the work machine and a second assistance process element which causes an output interface of the remote operation device to output the image captured by the actual machine image capturing device of the work machine.

## Description

### Technical Field

The present invention relates to a remote operation system having a mutual communication function of communicating with each of plural work machines and with a remote operation device which remotely operates one work machine as a remote operation target among the plural work machines.

### Background Art

In related art, an operator operates a work machine from a remote place without riding the work machine. As such a work machine, for example, Patent Literature 1 discloses a remote operation system in which a master and a slave are provided to be capable of communicating with each other, the operator operates an operation lever provided to the master, and the slave arranged in an operator seat of a work machine thereby operates an operation lever of the work machine.

### Citation List

### Patent Literature

Patent Literature 1: Japanese Patent Laid-Open No. 2019-176401

### Summary of Invention

### Technical Problem

Incidentally, in a case where two or more work machines are remotely operated by one master, the master and respective slaves provided to the work machines have to be connected together to be capable of communicating with each other.

Further, in a case where one work machine is operated, an operator selects one work machine from plural work machines and switches work machines as operation targets.

However, for example, in a case where connection settings of the slaves are mistakenly performed, connection might be made with a different slave from that of the work machine selected by the operator. In a case where the operator actually rides a work machine, the operator can check an external appearance of the work machine and a circumstance of a site where the work machine is positioned before riding the work machine, but in a case where the work machine is remotely operated, such a check cannot be performed. Thus, it is difficult for the operator to notice that connection is made with an unintended work machine (a different slave). Even when the operator attempts to perform a check by images captured by cameras mounted on the work machines, because those images are similar images, it is difficult to distinguish one from another.

The present invention has been made in consideration of such problems, and an object thereof is to provide a remote operation system that is capable of causing information about a work machine selected by an operator and about a slave connected with a master to be output.

### Solution to Problem

To achieve such an object, a remote operation system of the present invention is a remote operation system having a mutual communication function of communicating with each of plural work machines and with a remote operation device which remotely operates one work machine as a remote operation target among the plural work machines, in which an actual machine image-capturing device being capable of capturing an image and actual machine identification information, an image of which is captured so as to be included in the image captured by the actual machine image-capturing device, are mounted on the work machine as a candidate of the remote operation target among the plural work machines, and the remote operation system includes: a first assistance process element which determines whether or not one work machine as the remote operation target among the plural work machines is selected, connects a cooperating work machine with the remote operation device, the cooperating work machine being identified by an identifier corresponding to selection information as information of the one selected work machine, when a determination is made that the one work machine is selected, and acquires the image captured by the actual machine image-capturing device of the cooperating work machine; and a second assistance process element which causes an output interface of the remote operation device to output the image captured by the actual machine image-capturing device of the cooperating work machine.

### Brief Description of Drawings

FIG. 1 is a configuration explanation diagram of a work assistance composite system as one embodiment of the present invention.
FIG. 2 is an explanatory diagram illustrating an example of a data structure stored in a database of a work assistance server.
FIG. 3 is an explanatory diagram about a configuration of a remote operation device.
FIG. 4 is an explanatory diagram illustrating an example of screen display of the remote operation device.
FIG. 5 is an explanatory diagram about a configuration of a work machine.
FIG. 6 is an explanatory diagram illustrating an example of an image photographed by an actual machine image-capturing device.
FIG. 7 is a flowchart illustrating an example of a work assistance process by the work assistance server.
FIG. 8 is a flowchart illustrating an example of another work assistance process by the work assistance server.

### Description of Embodiments

### First Embodiment

### (Configuration of Remote Operation System)

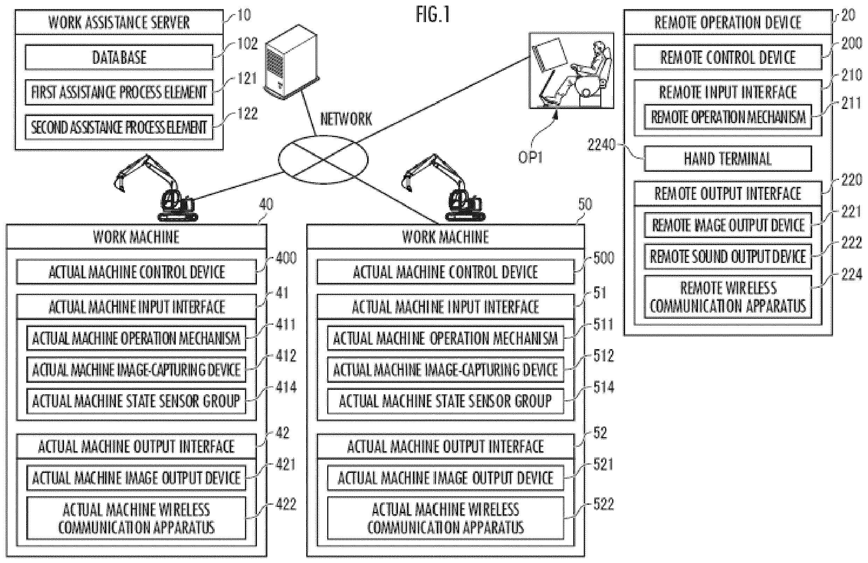

A work assistance system as one embodiment of the present invention, which is illustrated in FIG. 1, is configured with a work assistance server 10 for assisting remote operations of a first work machine 40 and a second work machine 50 by a remote operation device 20. The work assistance server 10, the remote operation device 20, the first work machine 40, and the second work machine 50 are configured to be capable of communicating with each other via a shared network or separate networks. Note that in FIG. 1, the work assistance server 10 is capable of being connected with the first work machine 40 or the second work machine 50, but it is sufficient that the work assistance server 10 is capable of being connected with two or more work machines, and the number of connected work machines is not restricted.

In the present embodiment, the work assistance server 10 will be described as a remote operation system which has a mutual communication function of communicating with each of plural work machines and with a remote operation device which remotely operates one work machine as a remote operation target among the plural work machines. Further, in the present embodiment, a description will be made about an example of a work assistance system which configures a composite system with the work assistance server 10, the remote operation device 20, the first work machine 40, and the second work machine 50.

"Acquiring" of various kinds of information by configuration elements (hardware) of the present invention represents a concept encompassing all computation processes for preparing various kinds of information in usable forms in the following computation processes, such as receiving the information, reading or searching for the information from an internal storage device (for example, a memory) and/or an external storage device (for example, an external database server), calculating, estimating, predicting, and identifying, for example, the information by executing a computation process by targeting information, the information being subjected to reception, reading, search, and so forth.

### (Configuration of Work Assistance Server)

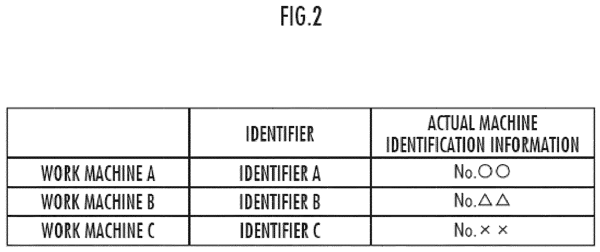

The work assistance server 10 includes a database 102, a first assistance process element 121, and a second assistance process element 122. The database 102 stores and retains captured image data and so forth. The database 102 may be configured with a database server separate from the work assistance server 10. Further, as illustrated in FIG. 2, the database 102 retains an identifier which is assigned to each of the first work machines 40 or the second work machines 50 and which is for identifying the work machine on the network (for example, an IP address assigned to each of the work machines) and actual machine identification information which includes information of the work machine corresponding to the identifier assigned to each of the first work machines 40 or the second work machines 50. Note that it is sufficient that the actual machine identification information is information by which one work machine and another work machine are identifiable, and for example, the actual machine identification information may be a specific number such as a product serial number, a two-dimensional code retaining information such as a specific number, or a symbol such as a circle symbol or a triangle symbol.

Each of the first assistance process element 121 and the second assistance process element 122 is configured with an arithmetic processing device (a single-core processor, a multi-core processor, or a processor core configuring that), reads necessary data and software from a storage device such as a memory, and executes a computation process based on the software for the data as a target, the computation process being described later.

### (Configuration of Remote Operation Device)

The remote operation device 20 includes a remote control device 200, a remote input interface 210, and a remote output interface 220. The remote control device 200 is configured with an arithmetic processing device (a single-core processor, a multi-core processor, or a processor core configuring that), reads necessary data and software from a storage device such as a memory, and executes a computation process based on the software for the data as a target.

The remote input interface 210 includes a remote operation mechanism 211 and a hand terminal 2240. The remote output interface 220 includes a remote image output device 221, a remote sound output device 222, a remote wireless communication apparatus 224, and the hand terminal 2240. The hand terminal 2240 is used as both of the remote input interface 210 and the remote output interface 220.

The remote operation mechanism 211 includes a traveling operation device, a revolution operation device, a boom operation device, an arm operation device, and a bucket operation device. Each of the operation devices has an operation lever which accepts a rotation operation. An operation lever (traveling lever) of the traveling operation device is operated to move a lower traveling body 410 of the work machine 40. The traveling lever may also serve as a traveling pedal. For example, a traveling pedal may be provided which is fixed to a base portion or a lower end portion of the traveling lever. An operation lever (revolution lever) of the revolution operation device is operated to move a hydraulic revolution motor which configures a revolution mechanism 430 of the work machine 40. An operation lever (boom lever) of the boom operation device is operated to move a boom cylinder 442 of the work machine 40. An operation lever (arm lever) of the arm operation device is operated to move an arm cylinder 444 of the work machine 40. An operation lever (bucket lever) of the bucket operation device is operated to move a bucket cylinder 446 of the work machine 40.

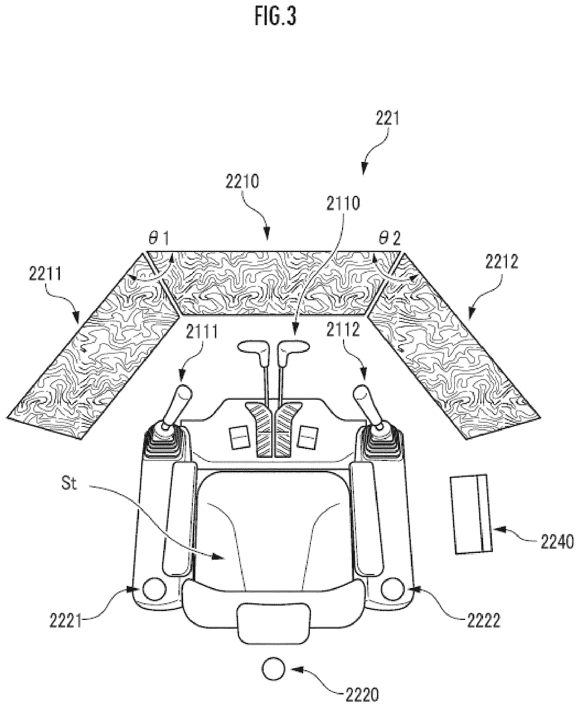

As illustrated in FIG. 3, the operation levers configuring the remote operation mechanism 211 are arranged around a seat St on which an operator OP1 is seated, for example. The seat St is in a form of a high-back chair with armrests but may be a seating portion in an arbitrary form on which the operator OP1 can be seated such as a form of a low-back chair without a headrest or a form of a chair without a backrest.

A pair of left and right traveling levers 2110 corresponding to left and right continuous tracks are arranged laterally side by side in a left-right direction in front of the seat St. One operation lever may serve as plural operation levers. For example, a left operation lever 2111 provided in front of a left frame of the seat St, which is illustrated in FIG. 2, may function as the arm lever in a case where the left operation lever 2111 is operated in a front-rear direction and may function as the revolution lever in a case where the left operation lever 2111 is operated in the left-right direction. Similarly, a right operation lever 2112 provided in front of a right frame of the seat St, which is illustrated in FIG. 3, may function as the boom lever in a case where the right operation lever 2112 is operated in the front-rear direction and may function as the bucket lever in a case where the right operation lever 2112 is operated in the left-right direction. Lever patterns may arbitrarily be changed by an operation instruction from the operator OP1.

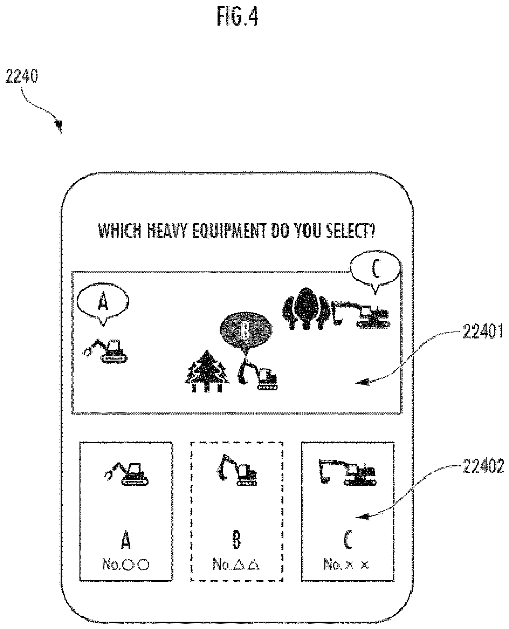

As illustrated in FIG. 3, the hand terminal 2240 is a display device which is installed in obliquely right front when seen from a seated position of the seat St, for example. A hand terminal 2240 has an input unit such as a touch panel, for example. As illustrated in FIG. 4, the hand terminal 2240 is capable of selecting the first work machine 40 or the second work machine 50 to be connected with the remote operation device 20 by the input unit such as a touch panel, for example. A display screen and an input surface of the hand terminal 2420 are directed to the seat St side. The hand terminal 2240 may be configured to be capable of angle adjustment of the display screen.

Specifically, as illustrated in FIG. 4, the display screen of the hand terminal 2420 displays, in its upper section 22401, images of plural work machines A to C as candidates for connection and displays, in its lower section 22402, the work machines A to C surrounded by outer frames. The upper section 22401 displays a map which indicates the position relationship among the plural work machine A to C, and the lower section 22402 displays respective machine numbers (actual machine identification information), specifications, and so forth of the work machines A to C. When any of the images of the work machines A to C in the upper section 22401 or the lower section 22402 is tapped by the operator OP1 and the work machine to be connected with the remote operation device 20 is selected, a display form (such as a color of the outer frame, a thickness of frame lines of the outer frame, flashing of an icon of the work machine, or a background color) of the work machine A, B, or C selected by the tapping in the lower section 22402 is changed such that the selected work machine is identifiable with respect to the non-selected work machines.

As illustrated in FIG. 3, the remote image output device 221 is configured with a central remote image output device 2210, a left remote image output device 2211, and a right remote image output device 2212 which are respectively arranged in front, in obliquely left front, and in obliquely right front of the seat St and have generally rectangular screens, for example. The respective shapes and sizes of the screens (image display regions) of the central remote image output device 2210, the left remote image output device 2211, and the right remote image output device 2212 may be the same or different.

The respective screens of the central remote image output device 2210, the left remote image output device 2211, and the right remote image output device 2212 may be parallel with a perpendicular direction or may be inclined with respect to the perpendicular direction. At least one image output device among the central remote image output device 2210, the left remote image output device 2211, and the right remote image output device 2212 may be configured with an image output device which is divided into plural portions. For example, the central remote image output device 2210 may be configured with a pair of image output devices which have generally rectangular screens and are adjacent to each other in an up-down direction.

The remote sound output device 222 is configured with one or plural speakers and is, as illustrated in FIG. 2, configured with a central remote sound output device 2220, a left remote sound output device 2221, and a right remote sound output device 2222 which are respectively arranged in the rear of the seat St, in a rear portion of the left armrest, and in a rear portion of the right armrest, for example. Respective specifications of the central remote sound output device 2220, the left remote sound output device 2221, and the right remote sound output device 2222 may be the same or different.

### (Configuration of First Work Machine)

As illustrated in FIG. 1, the first work machine 40 includes an actual machine control device 400, an actual machine input interface 41, and an actual machine output interface 42. The actual machine control device 400 is configured with an arithmetic processing device (a single-core processor, a multi-core processor, or a processor core configuring that), reads necessary data and software from a storage device such as a memory, and executes a computation process based on the software for the data as a target.

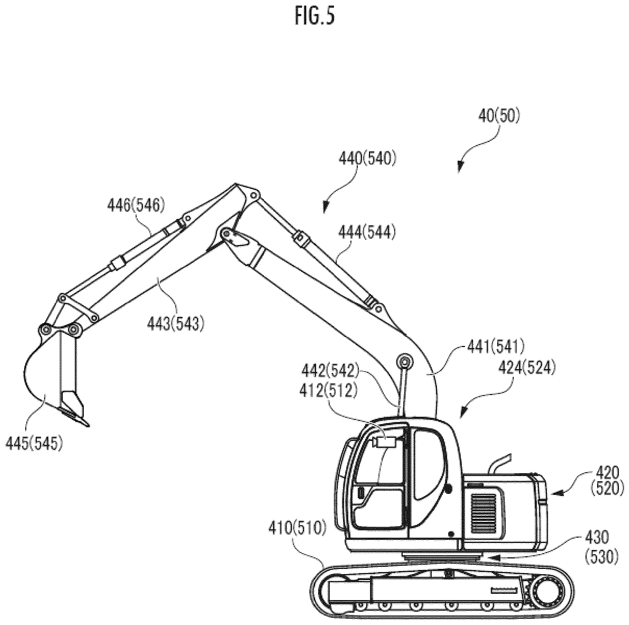

The first work machine 40 is a hydraulic, electric, or hybrid drive crawler excavator (construction machine), the hybrid drive being a combination of hydraulic and electric drives, for example, and includes, as illustrated in FIG. 5, a crawler lower traveling body 410 and an upper revolving body 420 which is revolvably mounted on the lower traveling body 410 via the revolution mechanism 430. A cab 424 (operator cab) is provided to a front left side portion of the upper revolving body 420. A work mechanism 440 is provided to a front central portion of the upper revolving body 420.

The actual machine input interface 41 includes an actual machine operation mechanism 411, an actual machine image-capturing device 412, and an actual machine state sensor group 414. The actual machine operation mechanism 411 includes plural operation levers, which are arranged similarly to those of the remote operation mechanism 211, around a seat arranged in an internal portion of the cab 424.

A drive mechanism or a robot, which receives a signal corresponding to an operation manner of remote operation levers and moves actual machine operation levers based on the received signal, is provided to the cab 424.

The actual machine image-capturing device 412 is installed in the internal portion of the cab 424, for example, and captures an image of an environment including at least a part of the work mechanism 440 through a front window and a pair of left and right side windows. A part, some, or all of the front window (or a window frame) and the side windows may be omitted.

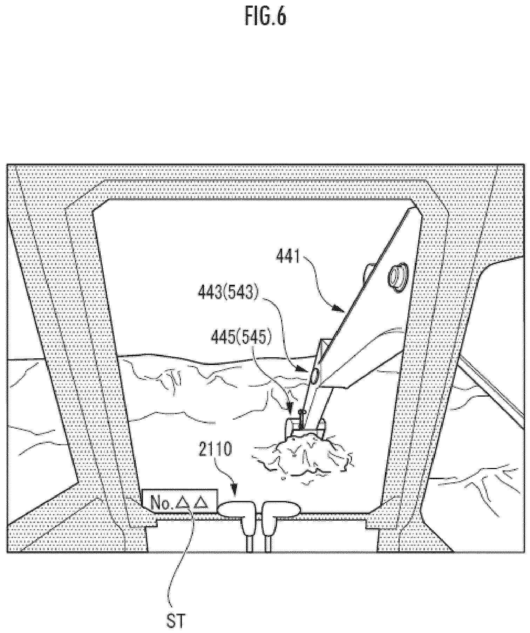

The actual machine image-capturing device 412 captures an image such that the image includes a sticker ST, in which the actual machine identification information (No. ## in FIG. 6) as the specific number assigned to the first work machine 40 is indicated. The sticker ST in which the actual machine identification information is indicated is pasted on the front window of the first work machine 40, for example. Images captured by the actual machine image-capturing device 412 are sequentially transmitted to the work assistance server 10. Note that the actual machine identification information is not limited to the sticker ST but may be engraved on a plate or may be engraved on a frame of the first work machine 40, for example.

Further, plural pieces of actual machine identification information may be provided to the first work machine 40. For example, the stickers ST may be pasted in which a specific number and a two-dimensional code retaining a specific number are indicated. In a case where the plural pieces of actual machine identification information are provided to the work machine in such a manner, all of the pieces of actual machine identification information do not have to be indicated in the same sticker, but plural stickers ST may be pasted in each of which one piece of actual machine identification information is indicated, for example.

The actual machine state sensor group 414 is configured with angle sensors for respectively measuring a rotation angle (derricking angle) of a boom 441 with respect to the upper revolving body 420, a rotation angle of an arm 443 with respect to the boom 441, and a rotation angle of a bucket 445 with respect to the arm 443, a revolution angle sensor for measuring a revolution angle of the upper revolving body 420 with respect to the lower traveling body 410, an external force sensor for measuring an external force exerted on the bucket 445, a three-axis acceleration sensor for measuring three-axis acceleration exerted on the upper revolving body 420, and so forth.

The actual machine output interface 42 includes an actual machine image output device 421 and an actual machine wireless communication apparatus 422. The actual machine image output device 421 is arranged in the internal portion of the cab 424 and in the vicinity of the front window, for example. The actual machine image output device 421 may be omitted.

The work mechanism 440 as an actuation mechanism includes the boom 441 which is attached to the upper revolving body 420 to be capable of derricking, the arm 443 which is rotatably coupled with a distal end of the boom 441, and the bucket 445 which is rotatably coupled with a distal end of the arm 443. To the work mechanism 440, a boom cylinder 442, an arm cylinder 444, and the bucket cylinder 446 which are configured with hydraulic cylinders capable of extending and contracting are attached. As work units, in addition to the bucket 445, various attachments such as a nibbler, a cutter, and a magnet may be used.

The boom cylinder 442 is interposed between the boom 441 and the upper revolving body 420 such that the boom cylinder 442 extends and contracts by being supplied with hydraulic oil so as to rotate the boom 441 in a derricking direction. The arm cylinder 444 is interposed between the arm 443 and the boom 441 such that the arm cylinder 444 extends and contracts by being supplied with hydraulic oil so as to rotate the arm 443 around a horizontal axis with respect to the boom 441. The bucket cylinder 446 is interposed between the bucket 445 and the arm 443 such that the bucket cylinder 446 extends and contracts by being supplied with hydraulic oil so as to rotate the bucket 445 around a horizontal axis with respect to the arm 443.

### (Configuration of Second Work Machine)

As illustrated in FIG. 1, the second work machine 50 includes an actual machine control device 500, an actual machine input interface 51, and an actual machine output interface 52. The actual machine control device 500 is configured with an arithmetic processing device (a single-core processor, a multi-core processor, or a processor core configuring that), reads necessary data and software from a storage device such as a memory, and executes a computation process based on the software for the data as a target.

The second work machine 50 is a hydraulic, electric, or hybrid drive crawler excavator (construction machine), the hybrid drive being a combination of hydraulic and electric drives, for example, and includes, as illustrated in FIG. 5, a crawler lower traveling body 510 and an upper revolving body 520 which is revolvably mounted on the lower traveling body 510 via a revolution mechanism 530. A cab 524 (operator cab) is provided to a front left side portion of the upper revolving body 520. A work mechanism 540 is provided to a front central portion of the upper revolving body 520.

The actual machine input interface 51 includes an actual machine operation mechanism 511, an actual machine image-capturing device 512, and an actual machine state sensor group 514. The actual machine operation mechanism 511 includes plural operation levers, which are arranged similarly to those of the remote operation mechanism 211, around a seat arranged in an internal portion of the cab 524.

A drive mechanism or a robot, which receives a signal corresponding to an operation manner of remote operation levers and moves actual machine operation levers based on the received signal, is provided to the cab 524.

The actual machine image-capturing device 512 is installed in the internal portion of the cab 524, for example, and captures an image of an environment including at least a part of the work mechanism 540 through a front window and a pair of left and right side windows. A part, some, or all of the front window (or a window frame) and the side windows may be omitted.

The actual machine image-capturing device 512 captures an image such that the image includes the sticker ST, in which the actual machine identification information assigned to the second work machine 50 is indicated. The sticker ST in which the actual machine identification information is indicated is pasted on the front window of the second work machine 50, for example. Images captured by the actual machine image-capturing device 512 are sequentially transmitted to the work assistance server 10 and are stored in the database 102. Note that the actual machine identification information is not limited to the sticker ST but may be engraved on a plate or may be engraved on a frame of the second work machine 50, for example.

The actual machine state sensor group 514 is configured with angle sensors for respectively measuring a rotation angle (derricking angle) of a boom 541 with respect to the upper revolving body 520, a rotation angle of an arm 543 with respect to the boom 541, and a rotation angle of a bucket 545 with respect to the arm 543, a revolution angle sensor for measuring a revolution angle of the upper revolving body 520 with respect to the lower traveling body 510, an external force sensor for measuring an external force exerted on the bucket 545, a three-axis acceleration sensor for measuring three-axis acceleration exerted on the upper revolving body 520, and so forth.

The actual machine output interface 52 includes an actual machine image output device 521 and an actual machine wireless communication apparatus 522. The actual machine image output device 521 is arranged in the internal portion of the cab 524 and in the vicinity of the front window, for example. The actual machine image output device 521 may be omitted.

The work mechanism 540 as an actuation mechanism includes the boom 541 which is attached to the upper revolving body 520 to be capable of derricking, the arm 543 which is rotatably coupled with a distal end of the boom 541, and the bucket 545 which is rotatably coupled with a distal end of the arm 543. To the work mechanism 540, a boom cylinder 542, an arm cylinder 544, and a bucket cylinder 546 which are configured with hydraulic cylinders capable of extending and contracting are attached. As work units, in addition to the bucket 545, various attachments such as a nibbler, a cutter, and a magnet may be used.

The boom cylinder 542 is interposed between the boom 541 and the upper revolving body 520 such that the boom cylinder 542 extends and contracts by being supplied with hydraulic oil so as to rotate the boom 541 in a derricking direction. The arm cylinder 544 is interposed between the arm 543 and the boom 541 such that the arm cylinder 544 extends and contracts by being supplied with hydraulic oil so as to rotate the arm 543 around a horizontal axis with respect to the boom 541. The bucket cylinder 546 is interposed between the bucket 545 and the arm 543 such that the bucket cylinder 546 extends and contracts by being supplied with hydraulic oil so as to rotate the bucket 545 around a horizontal axis with respect to the arm 543.

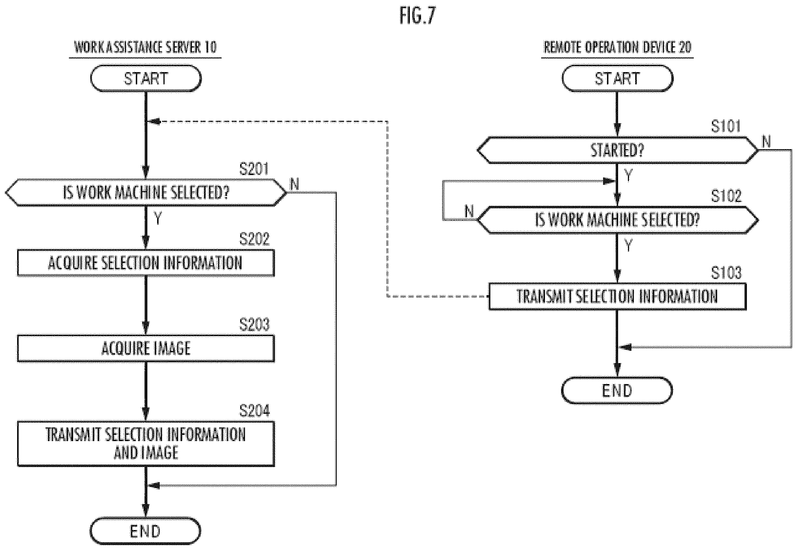

A description will be made, by using a flowchart illustrated in FIG. 7, about a work assistance process by the work assistance system, which is practiced by cooperation among the work assistance server 10, the remote operation device 20, the first work machine 40, and the second work machine 50 in the above configurations.

The work assistance system starts the work assistance process with a start of the remote operation device 20 being a trigger. When the operator OP1 starts the remote operation device 20 (Y in step S101), the remote operation device 20 displays, for example, on the display screen of the hand terminal 2240, the first work machine 40 and the second work machine 50 as candidates to be connected with the remote operation device 20 in a selectable manner. The operator OP1 selects the first work machine 40 or the second work machine 50 as the candidate for connection by touching an image of the work machine displayed on the hand terminal 2240, for example. The remote operation device 20 determines whether or not the work machine is selected (step S102). When it is determined that the work machine is selected (Y in step S102), the remote operation device 20 transmits information (selection information) of the work machine selected by the operator OP1 to the work assistance server 10 (step S103).

When the selection information is received, the work assistance server 10 stores the selection information in the database 102. The work assistance server 10 starts the work assistance process with reception of the selection information transmitted from the remote operation device 20 being a trigger. The first assistance process element 121 of the work assistance server 10 determines whether or not the work machine is selected (step S201).

The first assistance process element 121 of the work assistance server 10 refers to the database 102 and makes a determination in step S201 based on whether or not the selection information is stored. In a case where it is determined that the work machine is not selected (N in step S201), the first assistance process element 121 of the work assistance server 10 finishes the work assistance process.

In a case where it is determined that the work machine is selected (Y in step S201), the first assistance process element 121 of the work assistance server 10 acquires the selection information by referring to the database 102 (step S202), chooses the work machine corresponding to the selection information based on the actual machine identification information, and acquires an image captured by the actual machine image-capturing device of a cooperating work machine which is identified by the identifier of the chosen work machine (step S203). That is, the first assistance process element 121 is capable of acquiring the selection information which indicates that one first work machine 40 or one second work machine 50 to be the remote operation target among the plural work machines is selected. Further, the first assistance process element 121 is capable of connecting the cooperating work machine identified by the identifier corresponding to the selection information with the remote operation device 20. In addition, the first assistance process element 121 is capable of acquiring an image captured by the actual machine image-capturing device of one cooperating work machine which is connected with the remote operation device 20.

The second assistance process element 122 of the work assistance server 10 transmits the acquired selection information and image to the remote operation device 20 (step S204) and finishes the work assistance process.

The remote operation device 20 displays, on the remote image output device 221, the image transmitted from the work assistance server 10 in step S204, for example. The operator OP1 checks the image displayed on the remote image output device 221 by visual observation and is thereby enabled to check whether actual machine identification information, which is indicated by the sticker ST in the image captured by the actual machine image-capturing device of the cooperating work machine connected with the remote operation device 20, agrees with the selection information about the first work machine 40 or the second work machine 50.

Specifically, the operator OP1 visually observes the actual machine identification information included in the image displayed on the remote image output device 221 and the actual machine identification information displayed on the hand terminal 2240 together with the selection information and can thereby check whether both of those agree with each other.

Note that as long as a manner is used in which the operator OP1 can check the actual machine identification information included in the image and the actual machine identification information corresponding to the selection information, the actual machine identification information does not necessarily have to be displayed together with the selection information on the hand terminal 2240. For example, the remote operation device 20 may cause the remote sound output device 222 to output the selection information and the actual machine identification information corresponding to the selection information by a sound. Further, the operator OP1 may refer to a paper medium on which the selection information and the actual machine identification information corresponding to the selection information are indicated and may thereby check agreement with the actual machine identification information included in the image.

In a case where the operator OP1 checks that those do not agree with each other, the operator OP1 can intend to eliminate a state where the actual machine identification information does not agree with the selection information by taking a measure such as stopping the remote operation, restarting the work assistance system, or contacting a system manager.

Further, the remote operation device 20 displays, on the hand terminal 2240, a content of an operation input to the hand terminal 2240 in step S102 (a content indicating that either one of the first work machine 40 or the second work machine 50 is selected), for example. As the example illustrated in FIG. 4, the display form of the outer frame (the color, the thickness of the frame lines, or presence or absence of flashing) of the work machine A, B, or C selected by being tapped in the lower section 22402 is changed, and the operator OP1 checks, by visual observation, the content of the operation displayed on the hand terminal 2240 and is thereby enabled to check which work machine is selected by the operator OP1. Further, the content of the operation may be displayed on the remote image output device 221.

Further, the remote operation device 20 may cause the hand terminal 2240 or the remote image output device 221 to display the selection information received by the second assistance process element 122. The operator OP1 checks the received selection information by visual observation and is thereby enabled to check the selection information which is recognized by the first assistance process element 121 of the work assistance server 10. In a case where the received selection information does not agree with the work machine selected by the operator OP1 in step S102, the operator OP1 can intend to eliminate a state where the selection information does not agree with the work machine by taking a measure such as stopping the remote operation, restarting the work assistance system, or contacting the system manager.

### Second Embodiment

In the first embodiment, it is possible that the operator OP1 visually recognizes the image displayed on the image output device of the remote operation device 20 and thereby assesses whether the actual machine identification information agrees with the selection information. In a second embodiment, the work assistance server 10 determines whether the actual machine identification information agrees with the selection information.

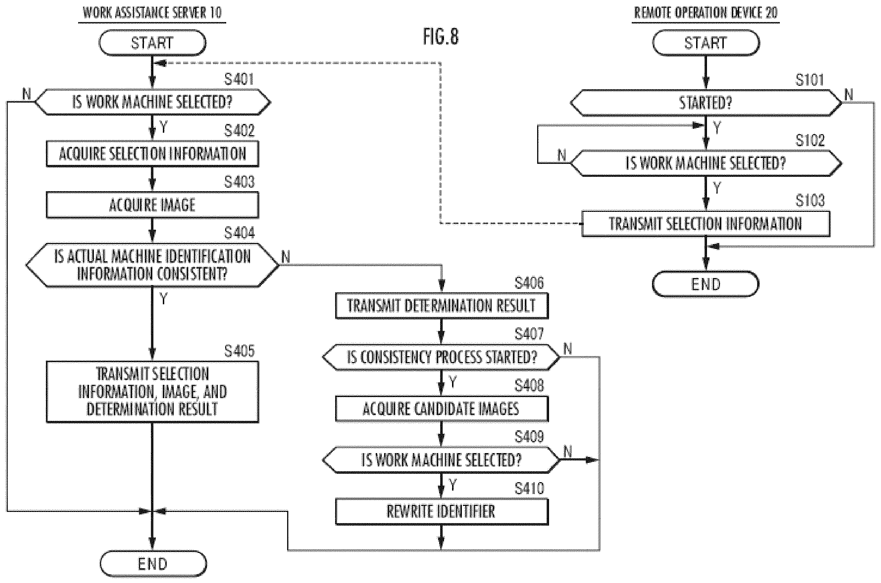

As illustrated in FIG. 8, the work assistance system starts the work assistance process with a start of the remote operation device 20 being a trigger. When the operator OP1 starts the remote operation device 20 (Y in step S301), the remote operation device 20 displays, for example, on the hand terminal 2240, the first work machine 40 and the second work machine 50 as candidates to be connected with the remote operation device 20 in a selectable manner. The operator OP1 selects the first work machine 40 or the second work machine 50 as the candidate for connection by touching an image of the work machine displayed on the hand terminal 2240, for example. The remote operation device 20 determines whether or not the work machine is selected (step S302). When it is determined that the work machine is selected (Y in step S302), the remote operation device 20 transmits information (selection information) of the work machine selected by the operator OP1 to the work assistance server 10 (step S303).

When the selection information is received, the work assistance server 10 stores the selection information in the database 102. The work assistance server 10 starts the work assistance process with reception of the selection information transmitted from the remote operation device 20 being a trigger. The first assistance process element 121 of the work assistance server 10 determines whether or not the work machine is selected (step S401).

The first assistance process element 121 of the work assistance server 10 refers to the database 102 and makes a determination in step S401 based on whether or not the selection information is stored. In a case where it is determined that the work machine is not selected (N in step S401), the first assistance process element 121 of the work assistance server 10 finishes the work assistance process.

In a case where it is determined that the work machine is selected (Y in step S401), the first assistance process element 121 of the work assistance server 10 acquires the selection information by referring to the database 102 (step S402), chooses the work machine corresponding to the selection information based on the actual machine identification information, and acquires an image captured by the actual machine image-capturing device of the cooperating work machine which is identified by the identifier of the chosen work machine (step S403).

The first assistance process element 121 of the work assistance server 10 has a function of extracting the actual machine identification information as character information from the acquired image by a character recognition measure such as OCR (optical character recognition), for example. The first assistance process element 121 determines whether or not the actual machine identification information is included in the acquired image and extracts the character information given as the actual machine identification information in a case where the actual machine identification information is included. That is, the first assistance process element 121 is capable of acquiring information about presence or absence of the actual machine identification information in the image and of acquiring the actual machine identification information assigned to each of the work machines in a case where the actual machine identification information is present.

The second assistance process element 122 of the work assistance server 10 determines whether or not the actual machine identification information extracted from the image by the first assistance process element 121 is consistent with the identifier of the work machine corresponding to the selection information acquired in step S402 (step S404). That is, the first assistance process element 121 is capable of recognizing the actual machine identification information from the image which is captured by the actual machine image-capturing device of one cooperating work machine to be the remote operation target among the plural work machines.

Further, the second assistance process element 122 is capable of acquiring the identifier corresponding to the selection information by referring to the database 102. The second assistance process element 122 is capable of acquiring the identifier corresponding to the actual machine identification information by referring to the database 102 based on the actual machine identification information extracted from the image by the first assistance process element 121.

The second assistance process element 122 is capable of making a determination about consistency between the identifier of the work machine corresponding to the selection information and the work machine with which the remote operation device 20 is connected by making a determination about consistency between the identifier corresponding to the selection information and the identifier corresponding to the actual machine identification information extracted from the image.

In a case where it is determined that the extracted actual machine identification information is consistent with the identifier of the work machine corresponding to the selection information in the determination in step S404 (Y in step S404), the second assistance process element 122 of the work assistance server 10 transmits the selection information, the image, and the determination result to the remote operation device 20, causes the remote output interface 220 to output those (step S405), and finishes the work assistance process. That is, the second assistance process element 122 of the work assistance server 10 is capable of transmitting the determination result about the consistency in step S404 and of causing the remote output interface 220 to output that.

When the transmission result that the consistency is achieved is received, the remote operation device 20 displays the determination result on the hand terminal 2240, for example. The operator OP1 visually observes the displayed determination result and can thereby check that the actual machine identification information and the selection information agree with each other. Note that the transmission result that the consistency is achieved may be output to the remote image output device 221.

In a case where it is determined that the extracted actual machine identification information is not consistent with the identifier of the work machine corresponding to the selection information in the determination in step S404 (N in step S404), the second assistance process element 122 of the work assistance server 10 transmits the determination result to the remote operation device 20 and causes the remote output interface 220 to output that (step S406).

When the transmission result that the consistency is not achieved is received, the remote operation device 20 displays the determination result on the hand terminal 2240, for example. The operator OP1 visually observes the determination result and can thereby check that the actual machine identification information and the identifier of the work machine corresponding to the selection information do not agree with each other. In a case where the operator OP1 checks that those do not agree with each other, the operator OP1 can intend to eliminate a state where the actual machine identification information does not agree with the identifier corresponding to the selection information by taking a measure such as stopping the remote operation, restarting the work assistance system, or contacting the system manager. Note that the transmission result that the consistency is not achieved may be output to the remote image output device 221.

Further, the remote operation device 20 may display, on the hand terminal 2240, the content of the operation input to the hand terminal 2240 in step S102 (information that the first work machine 40 or the second work machine 50 is selected), that is, the selection information, for example. The selection information to be displayed on the hand terminal 2240 is not limited to this, but for example, the selection information transmitted from the second assistance process element 122 to the remote image output device 221 may be displayed.

A state where the actual machine identification information does not agree with the identifier of the work machine corresponding to the selection information may occur in a case where connection settings are mistakenly performed such as a case where a wrong identifier is given when the identifier assigned to each of the work machines is given or may occur due to a defect in data which is caused by a mistake in input when the identifier is registered in the database 102, for example.

In the above-described method for eliminating the state where the actual machine identification information does not agree with the identifier of the work machine corresponding to the selection information, work is stopped; however, in a case where priority is given to continuation of the work, the following flow can be employed.

The second assistance process element 122 of the work assistance server 10 determines whether or not a consistency process for causing the actual machine identification information to become consistent with the identifier corresponding to the selection information is started (step S407). The consistency process is started by a touch by the operator OP1 on the display screen of the hand terminal 2240 of the remote operation device 20 (by selecting a process start button), for example. Based on the selection by the operator OP1, the remote operation device 20 generates execution instruction information for executing the consistency process or process-unnecessary information for not executing the consistency process and transmits that to the work assistance server 10. The work assistance server 10 makes the determination in step S407 based on the execution instruction information or the process-unnecessary information.

In a case where the operator OP1 does not start the consistency process (N in step S407), the work assistance server 10 finishes the work assistance process. On the other hand, in a case where the consistency process is started (Y in step S407), the flow progresses to step S408.

The first assistance process element 121 of the work assistance server 10 causes an image (hereinafter, also referred to as candidate image), which is captured by the actual machine image-capturing device of the other work machine than the work machine with which the remote operation device 20 is connected, to be transmitted to the work assistance server 10 and stores the image in the database 102. That is, the first assistance process element 121 acquires candidate images which are captured by the actual machine image-capturing device of the other work machine (step S408). The second assistance process element 122 transmits those candidate images to the remote operation device 20 and causes the remote output interface 220 to sequentially output those.

The remote operation device 20 causes the remote image output device 221 to display those candidate images in a selectable manner and causes the hand terminal 2240 to display a message which advises selection of the candidate image of the work machine with which connection is requested and selection of the actual machine identification information. The operator OP1 selects the candidate image including the actual machine identification information corresponding to the selection information by utilizing the actual machine identification information of the sticker ST included in the candidate image and selects the actual machine identification information, for example. Further, in a case where the candidate image of the work machine with which connection is requested is not present among those candidate images, the operator OP1 selects a portion indicating that situation. In a case where a portion indicating that the candidate image of the work machine with which connection is requested is not present is selected, the remote operation device 20 generates work-machine-unselected information.

The remote operation device 20 transmits the candidate image and actual machine identification information which are selected by the operator OP1 or the work-machine-unselected information (hereinafter, the candidate image and actual machine identification information and the work-machine-unselected information will also be referred to as consistency information) to the work assistance server 10. The second assistance process element 122 of the work assistance server 10 determines whether or not the work machine is selected based on the candidate image and actual machine identification information or the work-machine-unselected information, which are transmitted from the remote operation device 20 (step S409).

That is, the first assistance process element 121 of the work assistance server 10 is capable of acquiring the consistency information from the remote output interface 220 of the remote operation device 20. Note that in the present embodiment, the work machine about which the actual machine identification information included in the candidate image has consistency with the actual machine identification information corresponding to the selection information will be referred to as real work machine.

In a case where the candidate image which has the actual machine identification information corresponding to the selection information is not selected by the operator OP1 (N in step S409), the work assistance server 10 finishes the work assistance process.

In a case where the candidate image including the actual machine identification information corresponding to the selection information is selected (Y in step S409), the second assistance process element 122 of the work assistance server 10 connects the remote operation device 20 with the work machine which has the candidate image having the actual machine identification information corresponding to the selection information and rewrites the identifier in the database 102 at a time before connection switching to the identifier at a time after the connection switching (step S410).

Note that because the identifier of the work machine which has been connected until this point (the identifier at a time before a rewriting process in step S410) does not necessarily agree with the actual machine identification information when the above identifier is rewritten to the identifier of the work machine at a time after the connection switching, it is advisable that a note such as "check needed on database 102" be given and the system manager or the like be able to subsequently check the note.

The second assistance process element 122 of the work assistance server 10 transmits completion information indicating that rewriting of the identifier is completed to the remote operation device 20 and finishes the work assistance process. That is, when the consistency information acquired by the first assistance process element 121 indicates a real cooperating work machine, the second assistance process element 122 of the work assistance server 10 is capable of rewriting the identifier corresponding to the cooperating work machine to the identifier of the work machine on which the actual machine image-capturing device capturing the candidate image is mounted.

When the completion information is received, the remote operation device 20 displays, for example, on the display screen of the hand terminal 2240, a message which indicates that the identifiers of the work machines as connection destinations are changed and which advises the operator OP1 to perform a check. Such display is performed, and the operator OP1 can thereby again check the connected work machine after the work machines as the connection destinations are changed. Consequently, the operator OP1 is enabled to remotely operate the work machine while recognizing necessity of a check about discrepancy between the selection information and the actual machine identification information.

In the above descriptions about the first and second embodiments, a description is made about a case where the work assistance process is executed by the work assistance server 10. However, the work assistance process may be performed by the remote operation device 20 or may be performed by the first work machine 40 or the second work machine 50.

Further, a description is made on the assumption that an image is acquired which is captured by the actual machine image-capturing device 412 of the first work machine 40 or the actual machine image-capturing device 512 of the second work machine 50. However, an image may be acquired which is captured by another image-capturing device than the actual machine image-capturing device 412 of the first work machine 40 or the actual machine image-capturing device 512 of the second work machine 50.

Examples of such an image-capturing device may include a fixed point image-capturing device provided in a position where an image of an external appearance of the first work machine 40 or the second work machine 50 is capable of being captured and an image-capturing device provided to an aerial vehicle such as a drone.

In a case where such an image-capturing device is used, the sticker ST in which identification information is indicated is preferably provided in a position which is visually recognizable from the outside of the first work machine 40 and the second work machine 50. Examples of such a position may include side surfaces of the upper revolving body 420 of the first work machine 40 and of the upper revolving body 520 of the second work machine 50. Note that it is advisable that when a connection operation of the first work machine 40 or the second work machine 50 with the remote operation device 20 is performed, the fact that the connection operation is performed be notified to those image-capturing devices. Accordingly, transmission of an image from the image-capturing device to the work assistance server 10 can be started.

Further, for the sticker ST, a two-dimensional code or a symbol may be used. In a case where a two-dimensional code is put on the sticker ST, the first assistance process element 121 of the work assistance server 10 extracts the actual machine identification information from the two-dimensional code. Further, in a case where a symbol is put on the sticker ST, the first assistance process element 121 of the work assistance server 10 may recognize differences among symbols and thereby call the actual machine identification information corresponding to the symbol concerned by referring to the database 102.

Further, in the above first and second embodiments, when the work machine is newly connected with the remote operation device 20 or when the work machine which has been connected with the remote operation device 20 is switched to the other work machine, a notification may be provided to the remote output interface 220, the notification being for advising the operator OP1 to check whether the actual machine identification information represented by the sticker ST in the image captured by the actual machine image-capturing device of the work machine agrees with the selection information.

In the remote operation system of the present invention, the image including the actual machine identification information is output from the output interface of the remote operation device, and the remote operation device can thereby be caused to display the image, for example. Thus, the operator can visually recognize the actual machine identification information through the image. Consequently, the operator is enabled to check whether or not the work machine connected with the remote operation device agrees with the work machine as the operation target by checking discrepancy between the selection information and the actual machine identification information.

In the remote operation system of the present invention, the second assistance process element preferably causes the output interface of the remote operation device to output the selection information of the cooperating work machine to be identified by the first assistance process element. Further, in the remote operation system of the present invention, the first assistance process element preferably acquires the selection information input to an input interface of the remote operation device, and the second assistance process element preferably causes the output interface of the remote operation device to output a content of an input operation acquired by the first assistance process element.

In such an aspect, for example, the remote operation device can be caused to display the selection information. Accordingly, the operator is enabled to visually observe the image including the actual machine identification information and the selection information.

In the remote operation system of the present invention, the first assistance process element preferably determines whether or not the actual machine identification information is included in the image captured by the actual machine image-capturing device of the cooperating work machine, and when a determination is made that the actual machine identification information is included in the image, the second assistance process element preferably makes a determination about consistency between the actual machine identification information and the selection information and preferably causes the output interface of the remote operation device to output a determination result about the consistency.

In such an aspect, the determination result of the determination about the consistency between the selection information and the actual machine identification information is transmitted to the remote operation device, and the remote operation device can thereby be caused to display the determination result, for example.

In the remote operation system of the present invention, in a case where the actual machine identification information included in the image is different from the actual machine identification information corresponding to the selection information, the first assistance process element preferably acquires a candidate image captured by the actual machine image-capturing device of another work machine than the cooperating work machine among the plural work machines and preferably acquires, from the remote operation device, consistency information about whether or not the work machine on which the actual machine image-capturing device capturing the candidate image is mounted is a real cooperating work machine, the second assistance process element preferably causes the output interface of the remote operation device to output the candidate image acquired by the first assistance process element, and when the consistency information acquired by the first assistance process element indicates the real cooperating work machine, the second assistance process element preferably rewrites the identifier corresponding to the cooperating work machine to an identifier of the work machine on which the actual machine image-capturing device capturing the candidate image is mounted.

In such an aspect, based on an intention of the operator, the identifier corresponding to the cooperating work machine is changed to the identifier of the work machine on which the actual machine image-capturing device capturing the candidate image is mounted. Thus, the operator can recognize a timing when the identifiers are changed.

### Reference Signs List

- 10: work assistance server
- 121: first assistance process element
- 122: second assistance process element
- 20: remote operation device
- 40, 50: work machine

## Claims

1. A remote operation system having a mutual communication function of communicating with each of plural work machines and with a remote operation device which remotely operates one work machine as a remote operation target among the plural work machines, wherein
an actual machine image-capturing device being capable of capturing an image and actual machine identification information, an image of which is captured so as to be included in the image captured by the actual machine image-capturing device, are mounted on the work machine as a candidate of the remote operation target among the plural work machines, and
the remote operation system comprises:
a first assistance process element which determines whether or not one work machine as the remote operation target among the plural work machines is selected, connects a cooperating work machine with the remote operation device, the cooperating work machine being identified by an identifier corresponding to selection information as information of the one selected work machine, when a determination is made that the one work machine is selected, and acquires the image captured by the actual machine image-capturing device of the cooperating work machine; and
a second assistance process element which causes an output interface of the remote operation device to output the image captured by the actual machine image-capturing device of the cooperating work machine.

2. The remote operation system according to claim 1, wherein
the second assistance process element causes the output interface of the remote operation device to output the selection information of the cooperating work machine to be identified by the first assistance process element.

3. The remote operation system according to claim 1 or 2, wherein
the first assistance process element acquires the selection information input to an input interface of the remote operation device, and
the second assistance process element causes the output interface of the remote operation device to output a content of an input operation acquired by the first assistance process element.

4. The remote operation system according to any one of claims 1 to 3, wherein
the first assistance process element determines whether or not the actual machine identification information is included in the image captured by the actual machine image-capturing device of the cooperating work machine, and
when a determination is made that the actual machine identification information is included in the image, the second assistance process element makes a determination about consistency between the actual machine identification information and the selection information and causes the output interface of the remote operation device to output a determination result about the consistency.

5. The remote operation system according to any one of claims 1 to 4, wherein
in a case where the actual machine identification information included in the image is different from the actual machine identification information corresponding to the selection information, the first assistance process element acquires a candidate image captured by the actual machine image-capturing device of another work machine than the cooperating work machine among the plural work machines and acquires, from the remote operation device, consistency information about whether or not the work machine on which the actual machine image-capturing device capturing the candidate image is mounted is a real cooperating work machine, and
the second assistance process element causes the output interface of the remote operation device to output the candidate image acquired by the first assistance process element, and when the consistency information acquired by the first assistance process element indicates the real cooperating work machine, the second assistance process element rewrites the identifier corresponding to the cooperating work machine to an identifier of the work machine on which the actual machine image-capturing device capturing the candidate image is mounted.
